# EUROPEAN PATENT SPECIFICATION

(11) **EP 2 074 066 B1**
(45) Date of publication and mention of the grant of the patent: **26.05.2010**
(21) Application number: 07834643.4
(22) Date of filing: 22.10.2007
(51) Int. Cl.: C02F 1/469, B01D 61/44, C02F 3/28, C02F 11/04, C02F 1/44

(54) **SIMULTANEOUS ACID AND BASE PRODUCTION FROM AN AQUEOUS STREAM**
SIMULTANE SÄUREN- UND BASENHERSTELLUNG AUS EINEM WÄSSRIGEN STROM
PRODUCTION SIMULTANÉE D'ACIDE ET DE BASE À PARTIR D'UN COURANT AQUEUX

(30) Priority: 20.10.2006 EP 06122654
(43) Date of publication of application: 01.07.2009
(73) Proprietor: Paques B.V., 8561 EL Balk (NL)
(72) Inventor: VAN DER HEIJDEN, Petrus Cornelis, 8447 CB Heerenveen (NL); VELLINGA, Sjoerd Hubertus Jozef, 8458 CP Tjalleberd (NL); THOLEN, Johannes Petrus Paulus, 1405 GX Bussum (NL)
(74) Representative: Swinkels, Bart Willem
(86) International application number: PCT/NL2007/050505
(87) International publication number: WO 2008/048103

(56) References cited:
- EP-A- 1 568 408
- EP-A2- 0 230 021
- GB-A- 2 249 307
- US-A- 5 814 498
- US-A1- 3 964 985
- US-A1- 5 746 920

## Description

The present invention pertains to a process and an equipment for the treatment of waste water or process streams which allows cations to be removed from the stream and the pH of the stream to be adjusted. Base is produced simultaneously and can be used for other processes.

### Background

For the treatment of waste water, different process units are often linked to meet the requirements of effluent quality. In some cases, different pH correction steps have to be applied in operating a waste water treatment unit. Besides the cost of the chemicals needed for pH correction (acid and base), a severe conductivity increase results from the subsequent dosing of acids and bases.

For the recovery of acids or bases, ion exchange membranes are used in the diffusion dialysis process. As a result of large concentration differences between feed and permeate, acids can be recovered by using an anion exchange membrane and bases can be recovered by using a cation exchange membrane. No electricity has to be used (Strathmann p.206, Mulder p.362) for this process. However, such recovery is only cost efficient if the concentration difference of the acid or the base over the membranes is high (higher than 0.1 mol/l), otherwise the required membrane surface becomes very high. Furthermore, diffusion dialysis can only be used in processes where the ions are transported from a high concentration to a low concentration. Recovering acids or bases with lower concentrations and against their concentration gradient necessitates the input of electrical energy.

Producing acid and base from a salt is possible with the help of bipolar membranes and electricity (Wilhelm p.135, Strathmann p.184). A salt is separated into the cation base and anion acid by applying an electrical tension. An important problem is the precipitation of multivalent cations in the membranes because of the high pH of the caustic solution. Furthermore, the liquid streams passing the bipolar membranes have to be low in salts to allow splitting of water in the bipolar membrane. This process is not suitable for use in streams with a high concentration of ions like waste water streams.

An existing process of producing acids with membrane electrolysis from a salt solution is described in US patent 2,921,005) and optimised in US patent 3,964,985. In these processes acid is produced in an anode compartment, transported through cation exchange membranes to an intermediate compartment where the cations are replaced by the protons. The cations in the intermediate compartment are transported to a cathode compartment. An additional intermediate compartment has been added in US 3,964,985 to increase the energy efficiency of the process.

Important fouling problems of ion exchange membranes are related to anion-exchange membranes which are blocked by organic acids (humic acids). Cation exchange membranes have a lower tendency to foul. However, differences in pH at both sides of the membranes can cause formation of precipitates in and at the surface of the membranes. Especially multivalent cations like Ca, Mg, Fe and Al form easy crystals at higher pH values. Generally a pretreatment step to remove colloidal material and multivalent ions is applied upon using ion exchange membranes (Strathmann p.261).

In spite of the problems with multivalent cations and negatively charged organic acids, some combinations of charged membranes and biological processes exist. An example is the production of organic acids like itaconic acid with bipolar membranes (Strathmann p.319).

WO 2004/037397 describes a process for separating calcium or other multivalent cations from a fermentation broth which is limited in the concentration of anions such as lactate, wherein the broth is conducted through an anode chamber of an electrodialysis apparatus, which anode chamber is separated from a cathode chamber by an anion-selective or non-selective membrane. The process results in a calcium hydroxide solution and a lactic acid solution.

The problem underlying the present invention is to provide a process and an apparatus allowing the adjustment of the pH of a waste stream for further processing or further use, without the necessity of adding chemicals in the waste stream, and avoiding precipitates of multivalent cations without prior pretreatment of the waste stream.

### Description of the invention.

According to the invention, electrical energy is used for simultaneously producing acid and base, without a conductivity increase in an aqueous system, including a biological system. The process of the invention for separating cations from an aqueous stream and/or controlling pH of the aqueous stream comprises:
- providing an electrolysis cell (10) comprising an anode chamber (1), an electrolysis chamber (2), an intermediate chamber (3) and a cathode chamber (4), an anode (5) being positioned in said anode chamber (1) and a cathode (6) being positioned in said cathode chamber (4), said anode chamber (1) and said electrolysis chamber (2) optionally being separated by a first membrane (7), said electrolysis chamber (2) and said intermediate chamber (3) being separated by a second membrane (8), and said intermediate chamber (3) and said cathode chamber (4) being separated by a third membrane (9), said membranes (7), (8) and (9) being selectively permeable for cations,
- conducting the aqueous stream (11) into the electrolysis chamber (2),
- applying an electric potential difference between the anode (5) and the cathode (6),
- carrying off an acidified aqueous stream (15) from the electrolysis chamber (2),
- carrying off an alkaline aqueous stream (14) from the cathode chamber (4),
- carrying off the stream (13) containing monovalent and multivalent ions from said intermediate chamber (3), preferably to a second process to remove the multivalent cations,
- preferably removing multivalent ions from said stream containing monovalent and multivalent ions (13) and recirculating the stream from which multivalent ions have been removed (12) to said intermediate chamber (3).

In this preferred embodiment, the anode chamber and the electrolysis chamber are separate. Preferably they are separated by a selectively permeable membrane. In particular applications, especially where the influent does not interfere with anode processes, the anode chamber and the electrolysis chamber may be combined to a single chamber which serves both for receiving the influent water to be treated, and for electrolysis in the presence of the anode.

In another embodiment, the process can be performed in an apparatus having three chambers, wherein the anode chamber is a separate chamber, and the intermediate chamber and the second membrane are absent. This embodiment can be used for separating cations from an aqueous salt stream where the concentrations of multivalent cations, such as Ca, Mg, Fe and Al, are low.

In yet another embodiment a stream containing monovalent ions is conducted to said intermediate chamber, with or without said stream being the result of a multivalent ion removal step.

This and other embodiments can be used for treating aqueous streams including biomass, for example biomass originating from aerobic or anaerobic treatment of waste water or biomass (possibly genetically modified) originating from fermentation processes.

According to the invention, acid and base are produced and cations are removed from a liquid stream. The produced base can be collected and used in other processes as biologically produced base. For example, scaling can be prevented by in situ removal of scaling components.

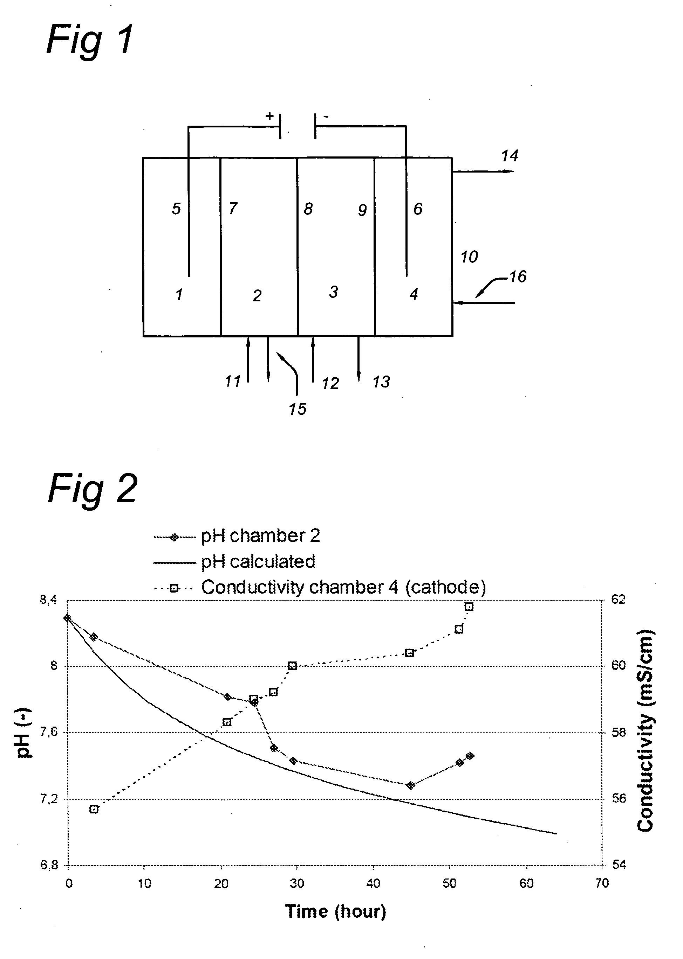

The process can be carried out in an apparatus as depicted in figure 1. The apparatus is a membrane electrolysis stack consisting of 3 chambers (1/2, 3, 4) or 4 chambers (1, 2, 3, 4) separated by cation exchange membranes (preferably selective for monovalent cations). The outer two chambers are the electrode chambers in which electrodes are placed, and an electrical tension is applied on the electrodes. In one electrode chamber (1, anode) H⁺ is formed by an electrode reaction and at the other electrode (4, cathode) OH⁻ is formed by an electrode reaction. Because of the applied electrical tension, the protons migrate to the chamber adjacent to the anode by passing the cation exchange membrane. The aqueous influent stream enters this chamber (2), and the pH of this stream is lowered because of the replacement of cations (e.g. Na⁺, NH₄⁺) by H⁺. The cations permeate to the chamber adjacent to the cathode where a salt (e.g. NaCl) solution recirculates (3). The bivalent cations (e.g. Ca²⁺ and Mg²⁺) that have the tendency to form crystals (e.g. calcium carbonate or calcium hydroxide), are either removed by a secondary process unit (e.g. ion exchange or nanofiltration), or diluted by the monovalent cations in the salt solution. As a result, only monovalent cations enter the cathode chamber (4), where a base is formed without the risk of scaling. This base can be collected and used in another process where a base dosage is needed.

The process of the invention uses ion exchange membranes. Such membranes are used in the chlor-alkali process for producing caustic soda and chlorine from sea water. Furthermore, cation exchange membranes are used in electrodialysis for desalting water streams. The semipermeable membranes to be used in the invention are preferably cation-exchange membranes allowing the transfer of cations (including protons). An important advantage of only using cation exchange membranes instead of both using cation and anion exchange membranes in electrodialysis is the prevention of the fouling of organic acids on anion exchange membranes.

Examples of suitable cation exchange membranes include polymers containing carboxylic or sulphonic group (e.g. polyether sulphone (PES), polysulphone (PSf), polyether-etherketone (PEEK), polystyrene (PS), polyethylene (PE), polytetrafluoroethylene (PTFE, e.g. Nafion), cation exchange membranes based on resins (e.g. polymer-clay composite materials) or other materials which have a selectivity for ions and a selectivity of cations over anions.

The process of the invention uses two (for three chambers) or three (for four chambers) cation exchange membranes. These membranes can be made from the same material, but to reduce the scaling of multivalent ions in the membrane separating the intermediate and cathode chambers (9), selectivity for monovalent ions over multivalent ions is preferred in the membranes between the electrolysis and cathode chambers (8) and (9). Membranes with selectivity for monovalent ions are described in the art (e.g. Strathmann p. 105 and Xu). Such selectivity can be achieved for example by the introduction of a small amount of anion exchange groups in the membrane.

The electrode chambers and reaction chambers of the apparatus of the invention can be based on conventional materials for ion exchange membrane process and the dimensions can be adjusted to the specific process. The electrodes to be used can be of conventional design, e.g. an anode of Ti coated with Rb or Pt or other materials which catalyse the anode reaction 4H₂O → 4H⁺+O₂ and a cathode of stainless steel or other materials which catalyse the cathode reaction 4H₂O → 4OH⁻+H₂ (or 2H₂O+O₂→ 4OH⁻). Other cathode and anode reactions converting electrical energy to hydroxyl ions and protons are possible as well. However, unwanted side reactions forming hazardous by-products or wasting a lot of electrical energy should be prevented (e.g. 2Cl⁻ → Cl₂). Therefore the anode is preferably placed in a solution of an acid (e.g. H₂SO₄) in a chamber separated from the aqueous waste stream. Alternatively, it is possible to place the anode directly in the aqueous waste stream without the need of a separate chamber (1) and membrane (7), where the characteristics of the aqueous waste stream allow this.

Suitable materials and arrangements for ion exchange processes have been described by (Strathmann, p. 227) and can be obtained commercially. Characteristic for ion exchange devices are the small distance between membranes and electrodes to reduce the electrical resistance. The main difference between this invention and a conventional set-up is the presence of chamber (2). This chamber can contain a liquid stream containing a high amount of solids. Therefore the distance between the membranes cannot be as small as in a conventional set-up (millimetres) because of clogging of the solids. The electrode chambers (1) and (4) and the recirculating salt chamber (3) can be constructed according to standard ion exchange device design.

Intermediate chamber (3) can be dispensed with in some cases, depending on the presence of multivalent cations in the influent stream. It should be prevented that high concentrations of multivalent cations reach membrane (9). The maximum concentration depends on the pH in cathode chamber (4). The salt solution in chamber (3) has to be low in multivalent ions. This can be achieved in different ways:
- Flowing with a salt solution without multivalent cations through chamber (3);
- Recirculation of the salt solution with a multivalent ions removal step (e.g. nanofiltration, ionic resins, precipitation).

The process and apparatus of the invention allow a simultaneous control of the pH in a lower and higher pH biological process unit without dosing of chemicals and with a decrease of conductivity. The costs for the production of acid and base are electrical energy and demineralised water. The aqueous stream to be treated according to the invention can be any stream containing appreciable levels of electrolytes (salts), for example water streams with a high scaling potential resulting from the presence of multivalent cations such as calcium and magnesium. Such stream may also be a bacterial sludge stream.

Possible applications of the process and equipment of the invention in biological technology are:
- The pH control of a biological process (either waste water treatment or industrial fermentation) producing a base that can be used elsewhere (see example 1).
- The combination of a high pH hydrolysis step prior to lower pH anaerobic digestion.
- Treatment of aerobic effluent to remove alkalinity by CO₂ stripping to reduce scaling and conductivity. This can be an essential step in closing water cycles in industry because scaling is a main problem.

The invention also relates to a process for the treatment of waste water by aerobic and/or anaerobic treatment wherein at least part of the effluent of the (an)aerobic treatment is subjected to the process of separating cations as described above. In these both cases, one or more streams issuing from the cation separation can be returned to the aerobic or anaerobic treatment, respectively.

### Description of the figures:

Figure 1 schematically shows an apparatus for carrying out the process of the invention.
Figure 2 shows the pH and conductivity changes over time in the electrolysis chamber (see example 1).
Figure 3 shows the hardness in cathode chamber (4). Red line: without a calcium removal step in the intermediate chamber (3). At day 15 the liquid in the cathode chamber is replaced. The dark line shows the hardness with a calcium removal step in the intermediate chamber (see example 2).

### Example 1: Controlling the pH and NH₄⁺ concentration in a digester

A laboratory scale set-up was tested in combination with a conventional anaerobic digester to control the pH in the digester and to reduce the amount of NH₄ present in the digester to prevent ammonia toxicity. The digester and the membrane electrolysis device were connected by a recirculating flow. The membrane electrolysis device consisted of three chambers, two electrode chambers and one electrolysis chamber (chambers 1, 2 and 4) in figure 1. The used electrodes were stainless steel in the cathode chamber and Ti-Rb in the anode chamber. In the digester solid effluent of a brewery was digested. The used membrane in the anode (7) was Nafion and in the cathode (9) Selemion CSO, a commercially monovalent selective cation-exchange membrane. The applied tension varied between 5 and 30 V. The results are plotted in figure 2. At the x-axis the time is plotted and at the first y-axis the pH in the electrolysis chamber is plotted. At the second y-axis the conductivity increase as a result of the formation of base is plotted as well. A distinct pH decrease can be observed as well as an increase in conductivity in the base chamber. A calculation based on a charge balance and the production speed of H⁺ fits with the experimental result. After 60 hours of operation, the calcium concentration in the cathode chamber became too high and the membrane showed a water leakage because of deposition of a calcium salt in and at the membrane surface. The introduction of chamber 3 (the recirculating salt solution) prevents this scaling of the cation exchange membrane.

### Example 2: Prevention of scaling in the cathode compartment by recirculating over a cation exchange column

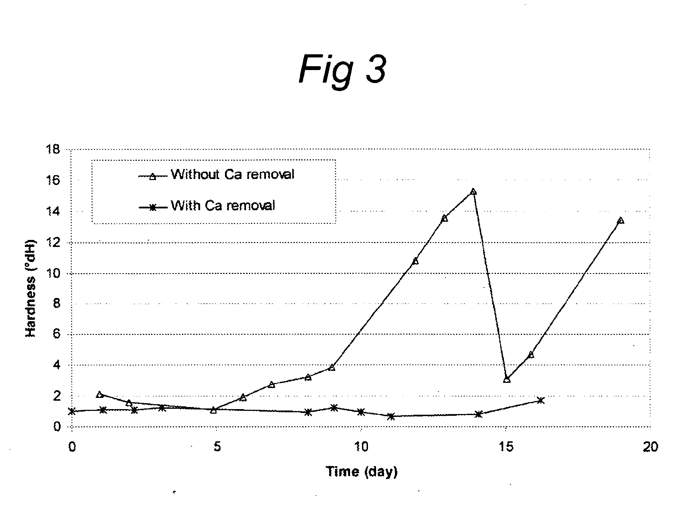

Water containing 7 dH of calcium and a pH of 7.5 is introduced in the electrolysis chamber (2) of a four-compartment module. In one experiment, the liquid in the intermediate chamber (3) is recirculated over a cation exchange resin column to remove Ca from the intermediate chamber. In another experiment, this calcium removal step is not applied. Results are plotted in figure 3. The results clearly show the accumulation of hardness in the cathode chamber in the situation where no calcium removal step is applied. In the experiment with a calcium removal step, the hardness in the cathode compartment (4) is always kept low. From these experiments it can be concluded that calcium can successfully be removed from the intermediate chamber to prevent scaling in the cathode chamber.

### References:

Wilhelm, F.G., Bipolar Membrane Electrodialysis (2001) Twente University Press, Enschede, NL
Mulder, M., Basic Principles of Membrane Technology (2nd edition (1996) Kluwer Academic Publishers, Dordrecht, NL
Strathmann, H., Ion-Exchange membrane separation processes, Membrane Science and technology seies, 9 (2004) Elsevier, Amsterdam, NL
Xu, T., Ion exchange membranes: State of their developments and perspective, Journal of Membrane Science 263 (2005) 1-29.

## Claims

1. A process for separating cations from an aqueous salt stream (11), comprising
- providing an electrolysis cell (10) comprising an anode chamber (1), an electrolysis chamber (2), an intermediate chamber (3) and a cathode chamber (4), an anode (5) being positioned in said anode chamber (1) and a cathode (6) being positioned in said cathode chamber (4), said electrolysis chamber (2) and said intermediate chamber (3) being separated by a second membrane (8), and said intermediate chamber (3) and said cathode chamber (4) being separated by a third membrane (9), said membranes (7), (8) and (9) being selectively permeable for cations,
- conducting the aqueous stream (11) into the electrolysis chamber (2),
- applying an electric potential difference between the anode (5) and the cathode (6),
- carrying off an acidified aqueous stream (15) from the electrolysis chamber (2),
- carrying off an alkaline aqueous stream (14) from the cathode chamber (4),
- carrying off a stream containing monovalent and multivalent ions (13) from said intermediate chamber (3),
- removing multivalent ions from said stream containing monovalent and multivalent ions (13) and recirculating the stream from which multivalent ions have been removed (12) to said intermediate chamber (3).

2. A process according to claim 1, in which said anode chamber (1) and said electrolysis chamber (2) are separated by a first membrane (7).

3. A process according to claim 1, in which anode chamber 1 and electrolysis chamber 2 are a single chamber.

4. A process according to any one of claims 1-3, in which membranes (8) and (9) are selective for monovalent cations over multivalent cations.

5. A process according to any one of claims 1-4, in which the pH within the intermediate chamber is between 5 and 9, preferably between 6.5 and 7.5.

6. A process according to any one of claims 1-5, in which the pH within the anode chamber is between 0 and 4, preferably between 0.5 and 2, and the pH within the cathode chamber is between 10 and 14, preferably between 11 and 13.

7. A process according to any one of claims 1-6, in which said aqueous stream (11) contains multivalent ions selected from magnesium, calcium, iron and aluminium.

8. A process according to any one of claims 1-7, in which the aqueous stream (11) contains between 0.1 and 200 g/l solids, especially biomass.

9. A process according to any one of claims 1-8, in which the aqueous stream (11) results from a digestion process, and the alkaline stream (14) is used for a hydrolysis step, prior to the digestion process.

10. An electrolysis device comprising a container (10) having an outer wall, said container being vertically divided into four serial chambers (1, 2, 3, 4), electrodes (5, 6) being located in the first (1) and last (4) of said chambers, said chambers being separated from each other by semipermeable membranes (7, 8, 9), wherein the semipermeable membranes (7, 8, 9) are permeable to cations and the semipermeable membranes (8) and (9) are preferably impermeable to multivalent cations, a liquid inlet (11) and a liquid outlet (15) being provided to the second chamber (2), a liquid inlet (12) and a liquid outlet (13) being provided to the third chamber (3), and a liquid inlet (16) and outlet (14) being provided to the last chamber (4), said liquid outlet (13) and said liquid inlet (12) being connected to a multivalent cation removal device.

## Patentansprüche

1. Verfahren zum Abtrennen von Kationen aus einem wäßrigen Salzstrom (11), das folgendes aufweist:
- Bereitstellen einer Elektrolysezelle (10), die eine Anodenkammer (1), eine Elektrolysekammer (2), eine Zwischenkammer (3) und eine Kathodenkammer (4) aufweist,
wobei sich eine Anode (5) in der Anodenkammer (1) und eine Kathode (6) in der Kathodenkammer (4) befinden, wobei die Elektrolysekammer (2) und die Zwischenkammer (3) durch eine zweite Membran (8) getrennt sind und die Zwischenkammer (3) und die Kathodenkammer (4) durch eine dritte Membran (9) getrennt sind, wobei die Membranen (7), (8) und (9) für Kationen selektiv durchlässig sind,
- Einleiten des wäßrigen Stroms (11) in die Elektrolysekammer (2),
- Anlegen einer elektrischen Potentialdifferenz zwischen der Anode (5) und der Kathode (6),
- Abführen eines angesäuerten wäßrigen Stroms (15) aus der Elektrolysekammer (2),
- Abführen eines wäßrigen alkalischen Stroms (14) aus der Kathodenkammer (4),
- Abführen eines einwertige und mehrwertige Ionen enthaltenden Stroms (13) aus der Zwischenkammer (3), und
- Entfernen von mehrwertigen Ionen aus dem einwertige und mehrwertige Ionen enthaltenden Strom (13) und Rezirkulieren des Stroms (12), aus dem mehrwertige Ionen entfernt worden sind, zur Zwischenkammer (3).

2. Verfahren nach Anspruch 1,
wobei die Anodenkammer (1) und die Elektrolysekammer (2) durch eine erste Membran (7) getrennt sind.

3. Verfahren nach Anspruch 1,
wobei die Anodenkammer (1) und die Elektrolysekammer (2) eine einzige Kammer sind.

4. Verfahren nach einem der Ansprüche 1 bis 3,
wobei die Membranen (8) und (9) für einwertige Kationen gegenüber mehrwertigen Kationen selektiv sind.

5. Verfahren nach einem der Ansprüche 1 bis 4,
wobei der pH-Wert in der Zwischenkammer 5 bis 9, vorzugsweise 6,5 bis 7,5 beträgt.

6. Verfahren nach einem der Ansprüche 1 bis 5,
wobei der pH-Wert in der Anodenkammer 0 bis 4, vorzugsweise 0,5 bis 2 beträgt, und
wobei der pH-Wert in der Kathodenkammer 10 bis 14, vorzugsweise 11 bis 13 beträgt.

7. Verfahren nach einem der Ansprüche 1 bis 6,
wobei der wäßrige Strom (11) mehrwertige Ionen enthält, die aus Magnesium, Calcium, Eisen und Aluminium ausgewählt sind.

8. Verfahren nach einem der Ansprüche 1 bis 7,
wobei der wäßrige Strom (11) 0,1 bis 200 g/l Feststoffe, insbesondere Biomasse enthält.

9. Verfahren nach einem der Ansprüche 1 bis 8,
wobei der wäßrige Strom (11) in einem Aufschlußverfahren entsteht und der alkalische Strom (14) für einen Hydrolyseschritt vor dem Aufschlußverfahren verwendet wird.

10. Elektrolysevorrichtung,
die einen Behälter (10) mit einer Außenwand aufweist, wobei der Behälter in vertikaler Richtung in vier aufeinanderfolgende Kammern (1, 2, 3, 4) unterteilt ist, wobei sich Elektroden (5, 6) in der ersten Kammer (1) und in der letzten Kammer (4) der Kammern befinden, wobei die Kammern durch semipermeable Membranen (7, 8, 9) voneinander getrennt sind, wobei die semipermeablen Membranen (7, 8, 9) für Kationen durchlässig sind und die semipermeablen Membranen (8) und (9) für mehrwertige Kationen vorzugsweise undurchlässig sind, wobei ein Flüssigkeitseinlaß (11) und ein Flüssigkeitsauslaß (15) für die zweite Kammer (2) vorgesehen sind, ein Flüssigkeitseinlaß (12) und ein Flüssigkeitsauslaß (13) für die dritte Kammer (3) vorgesehen sind, sowie ein Flüssigkeitseinlaß (16) und ein Auslaß (14) für die letzte Kammer (4) vorgesehen sind, wobei der Flüssigkeitsauslaß (13) und der Flüssigkeitseinlaß (12) mit einer Einrichtung zum Entfernen von mehrwertigen Kationen verbunden sind.

## Revendications

1. Procédé de séparation de cations d'un courant salé aqueux (11), comprenant
- réaliser une cellule d'électrolyse (10) comprenant une chambre d'anode (1), une chambre d'électrolyse (2), une chambre intermédiaire (3) et une chambre de cathode (4), une anode (5) étant positionnée dans ladite chambre d'anode (1), et une cathode (6) étant positionnée dans ladite chambre de cathode (4), ladite chambre d'électrolyse (2) et ladite chambre intermédiaire (3) étant séparées par une deuxième membrane (8), et ladite chambre intermédiaire (3) et ladite chambre de cathode (4) étant séparées par une troisième membrane (9), lesdites membranes (7, 8 et 9) étant sélectivement perméables aux cations,
- conduire un courant aqueux (11) dans la chambre d'électrolyse (2),
- appliquer une différence de potentiel électrique entre l'anode (5) et la cathode (6),
- évacuer un courant aqueux acidifié (15) de la chambre d'électrolyse (2),
- évacuer un courant aqueux alcalin (14) de la chambre de cathode (4),
- évacuer un courant contenant des ions monovalents et multivalents (13) de ladite chambre intermédiaire (3),
- retirer les ions multivalents dudit courant contenant des ions monovalents et multivalents (13) et recycler le courant duquel les ions multivalents ont été supprimés (12) dans ladite chambre intermédiaire (3).

2. Procédé selon la revendication 1, dans lequel ladite chambre d'anode (1) et ladite chambre d'électrolyse (2) sont séparées par une première membrane (7).

3. Procédé selon la revendication 1, dans lequel la chambre d'anode (1) et la chambre d'électrolyse (2) sont une chambre unique.

4. Procédé selon l'une quelconque des revendications 1 à 3, dans lequel les membranes (8) et (9) sont sélectives pour des cations monovalents sur des cations multivalents.

5. Procédé selon l'une quelconque des revendications 1 à 4, dans lequel le pH dans la chambre intermédiaire est entre 5 et 9, de préférence entre 6,5 et 7,5.

6. Procédé selon l'une quelconque des revendications 1 à 5, dans lequel le pH dans la chambre d'anode est entre 0 et 4, de préférence entre 0,5 et 2, et le pH dans la chambre de cathode est entre 10 et 14, de préférence entre 11 et 13.

7. Procédé selon l'une quelconque des revendications 1 à 6, dans lequel ledit courant aqueux (11) contient des ions multivalents sélectionnés parmi le magnésium, calcium, fer et aluminium.

8. Procédé selon l'une quelconque des revendications 1 à 7, dans lequel le courant aqueux (11) contient entre 0,1 et 200 g/l de solides, en particulier une biomasse.

9. Procédé selon l'une quelconque des revendications 1 à 8, dans lequel le courant aqueux (11) résulte d'un processus de digestion, et le courant alcalin (14) est utilisé pour une étape d'hydrolyse, avant le processus de digestion.

10. Dispositif d'électrolyse comprenant un contenant (10) ayant une paroi extérieure, ledit contenant étant divisé verticalement en quatre chambres sérielles (1, 2, 3, 4), des électrodes (5, 6) se trouvant dans la première (1) et la dernière (4) desdites chambres, lesdites chambres étant séparées les unes des autres par des membranes semi-perméables (7, 8, 9), où les membranes semi-perméables (7, 8, 9) sont perméables aux cations et les membranes semi-perméables (8) et (9) sont de préférence imperméables aux cations multivalents, une entrée de liquide (11) et une sortie de liquide (15) étant réalisées dans la deuxième chambre (2), une entrée de liquide (12) et une sortie de liquide (13) étant réalisées dans la troisième chambre (3), et une entrée de liquide (16) et une sortie (14) étant réalisées dans la dernière chambre (4), ladite sortie de liquide (13) et ladite entrée de liquide (12) étant reliées à un dispositif de retrait de cations multivalents.
